# FASCICULE DE BREVET EUROPEEN

(11) **EP 3 586 582 B1**
(45) Date de publication et mention de la délivrance du brevet: **12.05.2021**
(21) Numéro de dépôt: 19181520.8
(22) Date de dépôt: 20.06.2019
(51) Int. Cl.: A01C 5/06

(54) **UNITÉ D'IMPLANTATION AVEC UN ORGANE D'APPUI ET SEMOIR COMPRENANT DE TELLES UNITÉS**
PFLANZEINHEIT MIT EINEM STÜTZORGAN UND SÄMASCHINE, DIE SOLCHE EINHEITEN UMFASST
PLANTING UNIT WITH A SUPPORTING ELEMENT AND SOWING MACHINE COMPRISING SUCH UNITS

(30) Priorité: 22.06.2018 FR 1855556
(43) Date de publication de la demande: 01.01.2020
(73) Titulaire: Kuhn SAS, 67700 Saverne (FR)
(72) Inventeur: VIRIAT, Laurent, 67440 Westhouse-Marmoutier (FR)
(74) Mandataire: Cabinet Nuss

(56) Documents cités:
- US-A1- 2005 061 219
- US-A1- 2012 266 794
- US-A1- 2014 209 001
- US-A1- 2016 262 304

## Description

La présente invention concerne le domaine du machinisme agricole et plus particulièrement les machines d'ensemencement du type semoir standard ou en lignes, et a pour objet une unité d'implantation ou semeuse avec un organe de rappui, ainsi qu'un semoir comportant au moins une telle unité.

De manière connue, un semoir standard ou en lignes, qui peut être semi-porté ou tracté, comporte plusieurs unités d'implantation montées sur un bâti qui porte aussi un ou plusieurs réservoir(s) de produit(s) à semer/implanter (graines, engrais, ...).

Chaque unité d'implantation comporte traditionnellement, d'une part, deux disques ouvreurs de sillon, arrangés en V pointant dans la direction d'avance en utilisation, d'autre part, un moyen d'acheminement de produit(s) particulaire(s) ou granulaire(s) depuis un réservoir faisant partie du semoir, dont la sortie d'éjection est située entre les deux disques ouvreurs, et, enfin, éventuellement un organe allongé de rappui du produit déposé au fond du sillon. Ladite unité d'implantation comprend également un corps portant lesdits disques, moyen et organe précités et comporte au moins une jambe pour un montage rotatif des disques ouvreurs et l'assemblage d'une interface de solidarisation pour l'organe flexible de rappui, lequel comprend une extrémité de fixation avec l'interface et une extrémité opposée d'appui au fond du sillon.

Le corps de chaque unité d'implantation est lui-même fixé au bâti du semoir et chaque moyen d'acheminement consiste en général en un conduit ou tube dont la sortie est située à faible distance au-dessus du fond du sillon creusé par les disques ouvreurs.

De manière connue, chaque unité d'implantation peut aussi comporter des moyens (roues, disques) de fermeture de sillon (décalés vers l'arrière par rapport aux disques ouvreurs) et éventuellement des roues ou des disques de jauge permettant de régler et d'assurer une profondeur d'implantation continue du semis.

La distribution de produit(s) pour ces semoirs est du type fournissant une dose de graines par unité de surface de terrain à ensemencer.

L'organe de rappui a pour fonction d'uniformiser la profondeur de dépose de graines ou analogues dans le fond du sillon, afin de favoriser une levée homogène des plantes. Il vise également à assurer un bon contact entre les produits déposés et la terre fine du fond de sillon, en vue d'aboutir à une germination rapide, le fond du sillon étant normalement plus humide.

Différentes constructions de tels organes de rappui, généralement sous forme d'une lamelle flexible, avec des dispositifs de montage complexes, sont déjà connues en lien avec du semis de précision pour lequel les graines sont distribuées une à une sur la ligne de semis, à écartements constants, notamment par les documents suivants :
- US 2016/0262304 (utilisation traditionnelle d'un organe de rappui dans un semoir de précision qui délivre les graines une à une sur la ligne de semis, avec des écartements identiques ; fixation par le biais d'une bande en acier ressort) ;
- EP 2 911 494 (organe de rappui muni d'un insert de rigidification) ;
- US 2005/0241554 (organe de rappui supportant un tube de distribution de liquide) ;
- EP 3 158 844 (organe de rappui monté par l'intermédiaire d'un parallélogramme sollicité par ressorts).

Dans toutes ces constructions connues l'organe de rappui présente une position de montage unique, déterminée pour que ledit organe soit positionné au plus près de la sortie d'éjection associée.

De plus, les interfaces de montage de ces constructions connues sont complexes (nombreuses pièces) et nécessitent des outils pour le montage/démontage de l'organe.

Il existe par ailleurs des semoirs en lignes permettant, de manière versatile, d'implanter ou de distribuer un ou plusieurs produit(s) (par exemple : différents types de graines ; des graines et simultanément de l'engrais en granulés, ...). Ces semoirs à distribution multiple sont équipés d'au moins deux moyens d'acheminement se terminant par au moins deux sorties d'éjection débouchant entre les disques ouvreurs d'une unité d'implantation (à savoir une sortie avant et une sortie arrière : vues selon la direction d'avance A).

Ainsi, lors d'un même passage un seul ou deux types de produit(s) (peut) peuvent être sélectivement implanté(s), à savoir, par exemple : deux types de graines (un par la sortie avant et un autre par la sortie arrière) ou un seul type de graines (au choix par la sortie avant ou arrière).

Dans les réalisations actuelles de ces semoirs en lignes aptes à implanter deux types de produits, aucun organe de rappui n'est présent. La mise en œuvre d'un unique organe décalé longitudinalement au-delà de la sortie arrière ne serait pas satisfaisante lorsque seule la sortie avant est active, puisque le rappui des graines interviendrait trop tardivement. Et la mise en place de deux organes, associés chacun à l'un des deux orifices, n'est pas envisageable constructivement, puisque l'organe de rappui associé à la sortie avant gênerait la mise en terre des produits délivrés par la sortie arrière.

Le but de la présente invention est de fournir une solution simple de rappui pour un semoir en lignes doté d'unités d'implantation à distribution multiple, notamment avec faculté de double implantation par ligne.

A cet effet, l'invention a pour objet une unité d'implantation pour semoir en lignes, cette unité comprenant au moins, d'une part, deux disques ouvreurs de sillon, arrangés en V pointant dans la direction d'avance en utilisation du semoir, et d'autre part, au moins deux moyens d'acheminement de produit(s) particulaire(s) ou granulaire(s) depuis au moins un réservoir faisant partie dudit semoir, dont les sorties d'éjection respectives sont situées entre les deux disques ouvreurs en étant mutuellement décalées selon la direction d'avance, ladite unité d'implantation comprenant également un corps portant lesdits disques et moyens précités,
unité caractérisée en ce qu'elle comprend également un organe allongé de rappui du ou des produit(s) déposé(s) au fond du sillon, et une interface de solidarisation avec le corps pour ledit organe de rappui, lequel comprend une extrémité de fixation avec l'interface et une extrémité opposée d'appui et en ce que l'interface de solidarisation comprend au moins deux sites de fixation pour l'extrémité correspondante de l'organe, décalés entre eux longitudinalement selon la direction d'avance.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue schématique et en élévation latérale d'un semoir en lignes selon l'invention, comportant un réservoir subdivisé (les moyens d'acheminement des produits ne sont pas représentés) ;
la figure 2A est une vue schématique simplifiée et en élévation latérale d'une unité d'implantation selon l'invention ;
la figure 2B est une vue en perspective arrière selon la direction d'avance de l'unité représentée figure 2A, l'un des deux disques ouvreurs étant enlevé ;
les figures 3 et 4 sont des vues partielles du détail A de la figure 2A illustrant deux configurations différentes de montage de l'organe de rappui ;
la figure 5 est une vue en perspective du boîtier formant interface de solidarisation, faisant partie de l'unité représentée sur les figures 2 à 4 ;
la figure 6 est une vue en perspective d'un élément déflecteur faisant partie de l'unité représentée figure 4, et,
les figures 7 et 8 sont des vues en perspective selon des angles différents d'un organe de rappui faisant partie de l'unité représentée figures 2 à 4.

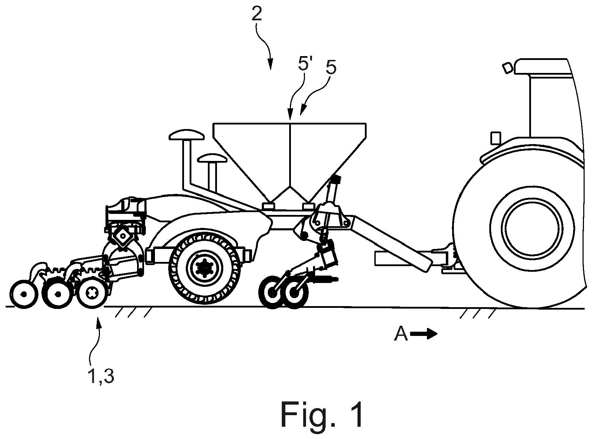

Les figures 1 à 4 montrent (pour certaines seulement partiellement) une unité d'implantation 1 pour semoir 2 en lignes, cette unité comprenant au moins, d'une part, deux disques 3 ouvreurs de sillon 8, arrangés en V pointant dans la direction d'avance A en utilisation du semoir 2, d'autre part, au moins deux moyens 4, 4' d'acheminement de produit(s) particulaire(s) ou granulaire(s) 2' depuis au moins un réservoir 5 faisant partie dudit semoir, dont les sorties d'éjection respectives 6, 6' sont situées entre les deux disques ouvreurs 3 en étant mutuellement décalées selon la direction d'avance A, et, enfin, un corps 9 portant lesdits disques 3 et moyens 4, 4' précités.

Conformément à l'invention, l'unité 1 comprend aussi un organe allongé 7 de rappui du ou des produit(s) 2' déposé(s) au fond 8' du sillon 8, et une interface 11 de solidarisation avec le corps 9 pour ledit organe 7 de rappui, lequel comprend une extrémité 7' de fixation avec l'interface 11 et une extrémité opposée 7" d'appui. De plus, l'interface de solidarisation 11 comprend au moins deux sites de fixation 12, 12' pour l'extrémité 7' correspondante de l'organe 7, décalés entre eux longitudinalement selon la direction d'avance A.

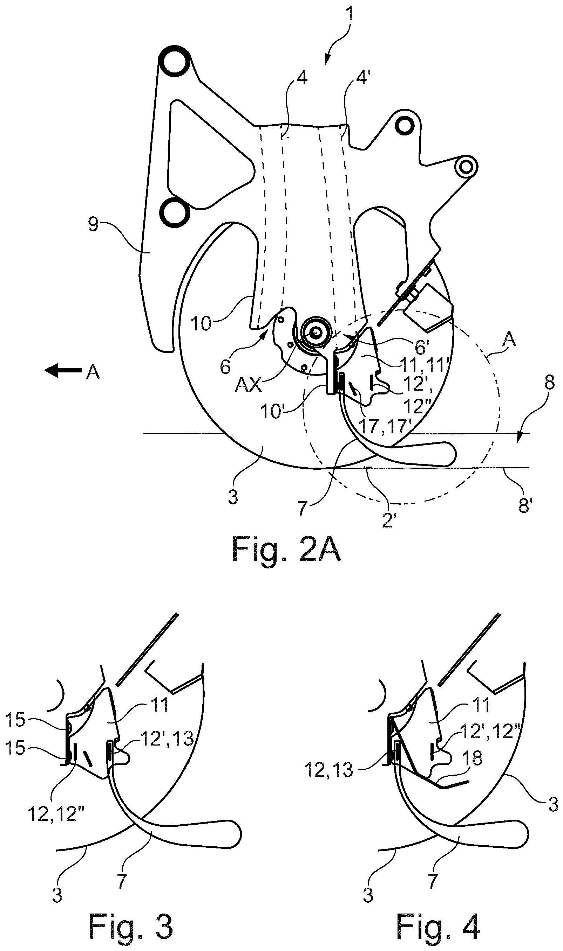

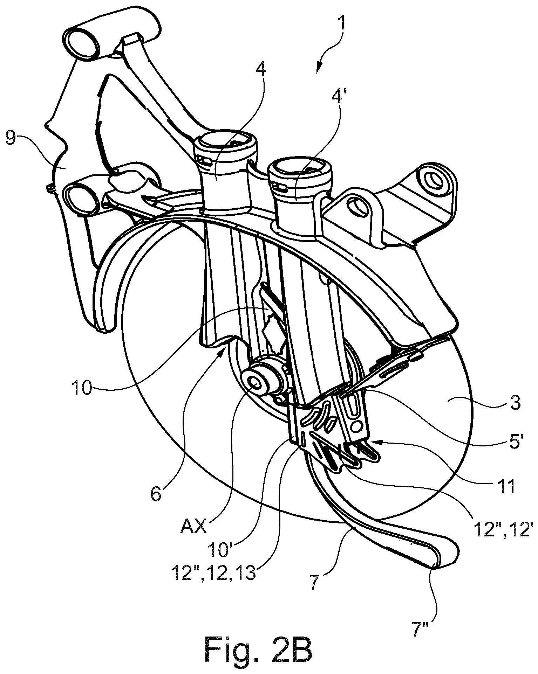

Le corps 9 permet ainsi un montage rotatif des disques ouvreurs 3 et la fourniture ou fixation d'une interface 11 de solidarisation pour l'organe 7 de rappui. L'interface de solidarisation 11 s'étend en dessous de la sortie d'éjection arrière 6', comme le montrent notamment les figures 2 à titre d'exemple.

L'interface de solidarisation 11 peut bien entendu consister en une partie de corps 9 (qui peut présenter une structure double avec un palier pour chaque disque ouvreur 3), mais est préférentiellement constituée par une pièce rapportée, fixée sur le corps 9.

Ainsi, grâce à l'invention, quelle que soit la configuration de semis, il est possible de positionner l'organe de rappui 7 de manière optimisée, c'est-à-dire au plus près de la sortie ou de l'une des sorties 6, 6' éjectant un produit 2'. Les deux fonctions dudit organe 7 (uniformiser la profondeur de dépose et assurer un bon contact du ou des produits 2' avec la terre du fond 8' du sillon 8), sont par conséquent réalisées au mieux quelle que soit la configuration d'ensemencement du semoir 2 (un produit 2' éjecté à l'avant ou à l'arrière / deux produits 2' éjectés à l'avant et à l'arrière).

Avantageusement, et comme le montrent les figures 2 à 5, l'interface de solidarisation 11 est pourvue de deux sites de fixation 12 et 12' décalés longitudinalement entre eux, chaque site 12, 12' définissant une position indexée selon la direction d'avance A de l'extrémité d'appui 7" de l'organe de rappui 7 par rapport aux sorties d'éjection 6, 6' respectives des deux moyens 4 et 4' d'acheminement de produit(s). Chacun de ces derniers peut être relié à un réservoir séparé, ou à un compartiment d'un réservoir 5 subdivisé (cf. trémie de la figure 1). Selon une alternative, la cloison 5' qui permet la séparation du réservoir 5 en deux parties est mobile (voire amovible) de manière à pouvoir adapter la répartition du volume intérieur dudit réservoir 5 au(x) type(s) de produit(s) à implanter (un seul type ou deux types de produit).

Comme l'illustrent également les figures précitées pour un exemple de réalisation à deux sorties 6 et 6', le second site de fixation 12' est au moins légèrement décalé longitudinalement vers l'arrière, dans la direction d'avance A, par rapport à la sortie d'éjection 6' située la plus en arrière dans ladite direction d'avance A des sorties 6, 6' des deux moyens d'acheminement de produit(s) 4 et 4' et le premier site de fixation 12 est au moins légèrement décalé vers l'arrière, par rapport à la sortie 6 située la plus en avant selon la direction d'avance A.

En accord avec un mode de réalisation de l'invention, aboutissant à une construction simple, et peu coûteuse, l'extrémité de fixation 7' de l'organe de rappui 7 est assemblée avec l'interface de solidarisation 11, au niveau de l'un des sites de fixation 12, 12' de cette dernière, par l'intermédiaire d'une liaison de solidarisation par encliquetage, préférentiellement aisément amovible.

Ainsi, aucune pièce d'assemblage spécifique n'est nécessaire et le montage, et éventuellement le démontage, peut (peuvent) être réalisé(s) sans aucun outil.

Selon une variante préférée dans le cadre du mode de réalisation précité, l'extrémité de fixation 7' de l'organe de rappui 7 comporte des moyens d'assemblage 13 aptes et destinés à coopérer avec l'un quelconque des sites de fixation 12, 12' de l'interface de solidarisation 11, la liaison de solidarisation par encliquetage de nature libérable étant obtenue par enclenchement élastique, notamment par déformation élastique d'une partie au moins de l'interface de solidarisation 11, en particulier d'au moins une paroi 14, 14' de ladite interface 11 comportant le site de fixation concerné 12, 12' ou une partie de ce dernier.

Conformément à un mode de réalisation préférentiel de l'invention, chaque site de fixation 12, 12' est constitué par une paire de fentes 12" alignées et coïncidentes, ménagées dans des parois opposées 14, 14' de l'interface de solidarisation 11.

Comme le montrent les figures 2 à 5 à titre d'exemple de construction pratique simple, économique et flexible dans sa mise en œuvre, l'interface de solidarisation 11 se présente sous la forme d'un boîtier comportant deux parois opposées 14, 14' pourvues de découpes 12" en forme de fentes. Ces fentes 12" sont arrangées de manière coïncidente en regard deux par deux et chaque paire de fentes coïncidentes 12" constituent un site de fixation 12, 12'. De plus, l'organe de rappui 7 comporte, au niveau de son extrémité de fixation 7', des protubérances 13 sur deux côtés latéraux opposés, ces protubérances 13 étant aptes et destinées à venir en engagement par encliquetage dans les fentes 12" d'une paire 12, 12' de fentes coïncidentes pour réaliser une liaison de solidarisation rigide entre ladite extrémité de fixation 7' et ledit boîtier 11.

Préférentiellement, le boîtier de solidarisation 11 est constitué d'une portion de tôle conformée pour constituer un corps creux 11' de section sensiblement polygonale (section rectangulaire vue en coupe selon un plan horizontal) et avec deux parois 14 et 14' opposées pourvues de fentes 12" mutuellement coïncidentes deux par deux, ces parois 14, 14' pouvant être déformées élastiquement pour faire varier localement leur écartement mutuel.

Comme le montrent les figures 2 à 4, la sortie d'éjection 6' du second moyen 4' d'acheminement de produit 2', avantageusement sous forme de tube et de conduit, débouche dans le, ou immédiatement au-dessus du, boîtier de solidarisation 11 qui forme un manchon à passage traversant. Ainsi, l'interface 11 constitue un prolongement du tube ou conduit 4', assurant un guidage supplémentaire du produit éjecté par la sortie arrière 6'.

Selon une caractéristique avantageuse de l'invention, l'interface de solidarisation 11 est fixé à une jambe 10 faisant partie du corps 9 et portant les disques ouvreurs 3, ladite interface 11 étant positionnée en-dessous et à l'arrière de l'axe de rotation AX desdits disques ouvreurs 3.

Comme le montrent à titre d'exemple les figures 2 à 4, le boîtier 11 formant interface de solidarisation peut être fixé par deux vis 15 sur un appendice 10' de la jambe support 10. La sortie d'éjection avant 6 s'étend à l'avant de l'axe de rotation AX alors que la sortie d'éjection arrière 6' s'étend à l'arrière de l'axe de rotation AX. La jambe 10 s'étend entre les sorties d'éjection 6 et 6'. De plus, il peut être prévu que le boîtier 11 soit fixé au corps 9 portant les disques ouvreurs 3 au niveau de bords libres repliés en regard 16 de la portion de tôle conformée formant le corps 11 ' du boîtier 11, lesdits bords 16 étant pris en sandwich entre le corps 9 et les têtes de vis de fixation 15. Selon une autre alternative, le boîtier de solidarisation 11 est obtenu par assemblage par soudure de parties séparées. De manière alternative, le boîtier de solidarisation 11 est une pièce moulée en plastique dont les parois sont élastiquement déformables.

Ainsi, lorsque l'interface 11 consiste en un boîtier formé par une tôle pliée, les bords repliés 16 peuvent se rejoindre sous les têtes des vis 15 et les parois 14, 14' en tôle déformables élastiquement, autorisent une mise en place et un enlèvement aisés de l'organe de rappui 7 dans les différents sites de fixation 12, 12', ainsi qu'une tenue ferme de ces derniers en coopération avec un guidage latéral dudit organe 7 entre lesdites parois 14, 14'.

Comme le montrent à titre illustratif les figures 2A et 2B, le corps 9 peut intégrer dans un seul ensemble structurel (par exemple assemblé par soudure), les interfaces de fixation dudit corps au bâti du semoir 2, la jambe 10 et les extrémités des deux conduits 4, 4' d'acheminement et de distribution de produits, se terminant par les sorties d'éjection 6, 6'.

L'organe de rappui 7 se présente avantageusement sous la forme d'une lamelle déformable élastiquement, en matière plastique, avec une extrémité de fixation 7' pourvue de moyens 13 d'engagement dans les fentes 12" des sites 12, 12' et une extrémité d'appui 7", le cas échéant progressivement épaissie et éventuellement profilée.

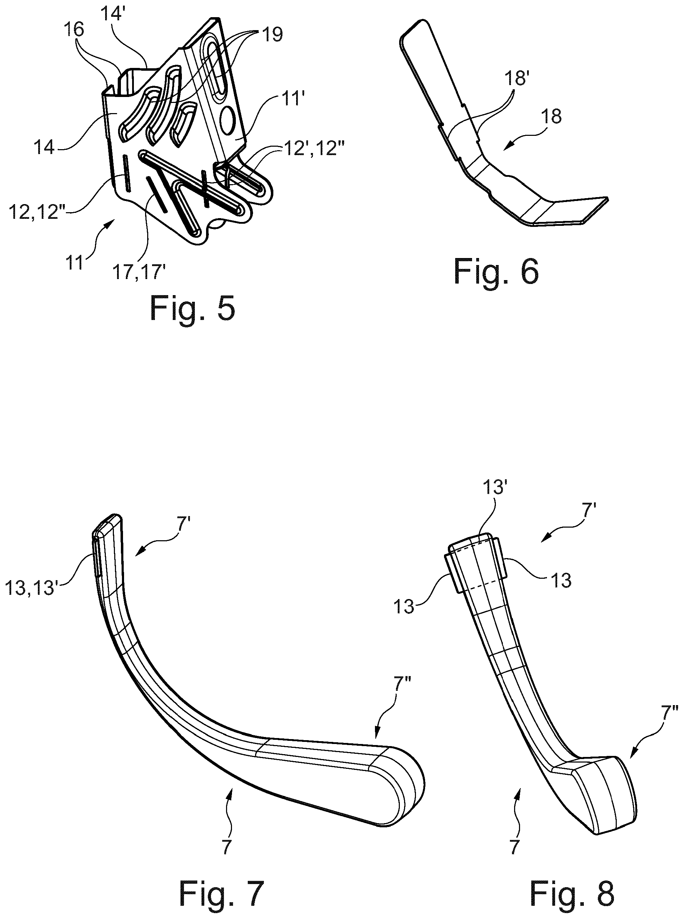

Ainsi que l'illustrent les figures 7 et 8, et conformément à une caractéristique de l'invention, l'organe de rappui 7 comporte des protubérances 13 saillantes latéralement au niveau de son extrémité de fixation 7' et constituant des moyens d'assemblage avec l'interface de solidarisation 11, ces protubérances 13 consistant avantageusement en des portions d'aile saillantes, et non surmoulées par le matériau polymère constitutif dudit organe 7, d'une lamelle métallique 13' formant insert intégré dans la seule extrémité de fixation 7' ou s'étendant dans une partie longitudinale au moins du corps dudit organe 7.

Afin de pouvoir prendre en compte des conditions de travail variées, des natures de sols différents ou des forces d'appui souhaitées ajustables, il peut être prévu qu'au moins certains des sites de fixation 12, 12' de l'interface de solidarisation 11 soient également décalés entre eux selon une direction verticale, c'est-à-dire perpendiculairement à la direction d'avance A.

Ainsi, à chaque position « longitudinale », peuvent éventuellement correspondre plusieurs positions « verticales » pour l'organe de rappui 7.

De manière additionnelle, il peut être prévu que l'interface de solidarisation 11 comporte également au moins un site 17 de fixation d'un élément déflecteur 18, par exemple un site 17 formé par deux fentes 17' en regard coïncidentes pour un montage par encliquetage d'un élément déflecteur 18 allongé en forme de lamelle, destiné à s'étendre au-dessus de l'organe de rappui 7 et pourvu de portions d'aile latérales saillantes 18' destinées à venir en engagement dans lesdites fentes 17'.

Pour favoriser l'évacuation de l'air soufflé par la sortie 6' débouchant dans le boîtier d'interface 11 (cet air servant à transporter les produits 2' dans les moyens d'acheminement 4, 4'), les parois du boîtier 11, qui définissent préférentiellement un manchon ouvert en parties supérieure et inférieure, comporte des ouvertures 18 formant évents 19.

Enfin, l'invention a également pour objet, comme le montre la figure 1, un semoir en lignes 2, tracté ou semi-porté. Ce semoir est caractérisé en ce qu'il comporte au moins une, préférentiellement plusieurs, unité(s) d'implantation 1 telle(s) que décrite(s) ci-dessus, équipée(s) chacune d'un organe 7 de rappui pouvant être positionné de manière interchangeable dans au moins deux positions décalées longitudinalement selon la direction d'avance A du semoir 2 en utilisation et d'au moins deux moyens 4, 4' d'acheminement dans le sillon 8 du ou des produit(s) 2' à déposer dont les sorties d'éjection 6, 6' respectives sont décalées selon la direction d'avance A, ces moyens 4, 4' pouvant être opérationnels ou actifs sélectivement ou simultanément.

Grâce à l'invention, et en fonction des souhaits de l'agriculteur, il est donc possible :
- de semer un type de graine par la sortie avant 6 et de rappuyer la graine avec l'organe de rappui 7 en position avant (cf. figure 2), la sortie arrière 6' n'est pas utilisée ;
- de semer un type de graine par la sortie avant 6 et de rappuyer la graine avec l'organe de rappui 7 en position avant et de répandre un autre produit du type engrais, granulés anti-limaces en surface via le déflecteur (cf. figure 4) ;
- d'implanter de l'engrais par la sortie avant 6, des graines par la sortie arrière 6' et de rappuyer la graine avec l'organe de rappui 7 en position arrière (cf. figure 3).

Enfin, il est aisé de retirer l'organe de rappui 7 lorsque l'on rencontre des conditions de sol collant, pour éviter de colmater l'espace entre les deux disques ouvreurs 3 (libération d'espace).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, l'étendue de protection de l'invention étant définie par les revendications annexées.

## Revendications

1. Unité d'implantation (1) pour semoir (2) en lignes, cette unité comprenant au moins, d'une part, deux disques (3) ouvreurs de sillon, arrangés en V pointant dans la direction d'avance (A) en utilisation du semoir, et, d'autre part, au moins deux moyens (4, 4') d'acheminement de produit(s) particulaire(s) ou granulaire(s) (2') depuis au moins un réservoir (5) faisant partie dudit semoir, dont les sorties d'éjection respectives (6, 6') sont situées entre les deux disques ouvreurs (3) en étant mutuellement décalées selon la direction d'avance (A), ladite unité d'implantation (1) comprenant également un corps (9) portant lesdits disques (3) et moyens (4, 4') précités, l'unité (1) comprenant un organe allongé (7) de rappui du ou des produit(s) (2') déposé(s) au fond (8') du sillon (8), et une interface (11) de solidarisation avec le corps (9) pour ledit organe (7) de rappui, lequel comprend une extrémité (7') de fixation avec l'interface (11) et une extrémité opposée (7") d'appui et **caractérisée en ce que** l'interface de solidarisation (11) comprend au moins deux sites de fixation (12, 12') pour l'extrémité (7') correspondante de l'organe (7), décalés entre eux longitudinalement selon la direction d'avance (A).

2. Unité d'implantation selon la revendication 1, **caractérisée en ce que** l'interface de solidarisation (11) est pourvue de deux sites de fixation (12 et 12') décalés longitudinalement entre eux, chaque site (12, 12') définissant une position indexée selon la direction d'avance (A) de l'extrémité d'appui (7") de l'organe de rappui (7) par rapport aux sorties d'éjection (6, 6') respectives des deux moyens (4 et 4') d'acheminement de produit(s).

3. Unité d'implantation selon la revendication 2, **caractérisée en ce que** le second site de fixation (12') est au moins légèrement décalé longitudinalement vers l'arrière, dans la direction d'avance (A), par rapport à la sortie d'éjection (6') située la plus en arrière dans ladite direction d'avance (A) des sorties (6, 6') des deux moyens d'acheminement de produit(s) (4 et 4') et **en ce que** le premier site de fixation (12) est au moins légèrement décalé vers l'arrière, par rapport à la sortie (6) située la plus en avant selon la direction d'avance (A).

4. Unité d'implantation selon l'une quelconque des revendications 1 à 3, **caractérisée en ce que** l'extrémité de fixation (7') de l'organe de rappui (7) est assemblée avec l'interface de solidarisation (11), au niveau de l'un des sites de fixation (12, 12') de cette dernière, par l'intermédiaire d'une liaison de solidarisation par encliquetage.

5. Unité d'implantation selon la revendication 4, **caractérisée en ce que** l'extrémité de fixation (7') de l'organe de rappui (7) comporte des moyens d'assemblage (13) aptes et destinés à coopérer avec l'un quelconque des sites de fixation (12, 12') de l'interface de solidarisation (11), la liaison de solidarisation par encliquetage de nature libérable étant obtenue par enclenchement élastique, notamment par déformation élastique d'une partie au moins de l'interface de solidarisation (11), en particulier d'au moins une paroi (14, 14') de ladite interface (11) comportant le site de fixation concerné (12, 12') ou une partie de ce dernier.

6. Unité d'implantation selon l'une quelconque des revendications 1 à 5, **caractérisée en ce que** chaque site de fixation (12, 12') est constitué par une paire de fentes (12") alignées et coïncidentes, ménagées dans des parois opposées (14, 14') de l'interface de solidarisation (11).

7. Unité d'implantation selon l'une quelconque des revendications 1 à 6, **caractérisée en ce que** la sortie d'éjection (6') du second moyen (4') d'acheminement de produit (2'), avantageusement sous forme de tube et de conduit, débouche dans le, ou immédiatement au-dessus de l'interface de solidarisation (11) qui forme un manchon à passage traversant.

8. Unité d'implantation selon l'une quelconque des revendications 1 à 7, **caractérisée en ce que** l'interface de solidarisation (11) est fixé à une jambe (10) faisant partie du corps (9) et portant les disques ouvreurs (3), ladite interface (11) étant positionnée en-dessous et à l'arrière de l'axe de rotation (AX) desdits disques ouvreurs (3).

9. Unité d'implantation selon l'une quelconque des revendications 1 à 8, **caractérisée en ce que** l'organe de rappui (7) comporte des protubérances (13) saillantes latéralement au niveau de son extrémité de fixation (7') et constituant des moyens d'assemblage avec l'interface de solidarisation (11), ces protubérances (13) consistant avantageusement en des portions d'aile saillantes, et non surmoulées par le matériau polymère constitutif dudit organe (7), d'une lamelle métallique (13') formant insert intégré dans la seule extrémité de fixation (7') ou s'étendant dans une partie longitudinale au moins du corps dudit organe (7).

10. Unité d'implantation selon l'une quelconque des revendications 1 à 9, **caractérisée en ce qu'**au moins certains des sites de fixation (12, 12') de l'interface de solidarisation (11) sont également décalés entre eux selon une direction verticale, c'est-à-dire perpendiculairement à la direction d'avance (A).

11. Unité d'implantation selon l'une quelconque des revendications 1 à 10, **caractérisée en ce que** l'interface de solidarisation (11) comporte également au moins un site (17) de fixation d'un élément déflecteur (18), par exemple un site (17) formé par deux fentes (17') en regard coïncidentes pour un montage par encliquetage d'un élément déflecteur (18) allongé en forme de lamelle, destiné à s'étendre au-dessus de l'organe de rappui (7) et pourvu de portions d'aile latérales saillantes (18') destinées à venir en engagement dans lesdites fentes (17').

12. Semoir en lignes (2), tracté ou semi-porté, **caractérisé en ce qu'**il comporte au moins une, préférentiellement plusieurs, unité(s) d'implantation (1) selon l'une des revendications 1 à 11, équipée(s) chacune d'un organe (7) de rappui pouvant être positionné de manière interchangeable dans au moins deux positions décalées longitudinalement selon la direction d'avance (A) du semoir (2) en utilisation et d'au moins deux moyens (4, 4') d'acheminement dans le sillon (8) du ou des produit(s) (2') à déposer dont les sorties d'éjection (6, 6') respectives sont décalées selon la direction d'avance (A), ces moyens (4, 4') pouvant être opérationnels ou actifs sélectivement ou simultanément.

## Patentansprüche

1. Pflanzeinheit (1) für eine Reihensämaschine (2), wobei diese Einheit wenigstens einerseits zwei Furchenscheiben (3) umfasst, die in Form eines "V" angeordnet sind, das bei Verwendung der Sämaschine in die Vorwärtsrichtung (A) zeigt, und andererseits wenigstens zwei Mittel (4, 4') zum Transport eines teilchenförmigen oder kornförmigen Produkts (teilchenförmiger oder kornförmiger Produkte) (2') aus wenigstens einem Behälter (5), der Teil der Sämaschine ist und dessen jeweilige Auswurföffnungen (6, 6') sich zwischen den zwei Furchenscheiben (3) befinden, wobei sie in der Vorwärtsrichtung (A) zueinander versetzt sind, wobei die Pflanzeinheit (1) außerdem einen Körper (9) umfasst, der die oben genannten Scheiben (3) und Mittel (4, 4') trägt,
wobei die Einheit (1) ein längliches Organ (7) zum Andrücken des oder der auf dem Boden (8') der Furche (8) abgelegten Produkte (2') und eine Schnittstelle (11) zur festen Verbindung mit dem Körper (9) für das Andruckorgan (7) umfasst, welches ein Ende (7') zur Befestigung an der Schnittstelle (11) und ein entgegengesetztes Druckende (7") umfasst,
**dadurch gekennzeichnet, dass** die Schnittstelle zur festen Verbindung (11) wenigstens zwei Befestigungsstellen (12, 12') für das entsprechende Ende (7') des Organs (7) umfasst, die zueinander in der Vorwärtsrichtung (A) längs versetzt sind.

2. Pflanzeinheit nach Anspruch 1, **dadurch gekennzeichnet, dass** die Schnittstelle zur festen Verbindung (11) mit zwei Befestigungsstellen (12, 12') versehen ist, die längs zueinander versetzt sind, wobei jede Stelle (12, 12') eine Position definiert, die in der Vorwärtsrichtung (A) des Andruckendes (7") des Druckorgans (7) in Bezug auf die jeweiligen Auswurföffnungen (6, 6') der zwei Mittel (4 und 4') zum Transport von Produkt (en) indexiert ist.

3. Pflanzeinheit nach Anspruch 2, **dadurch gekennzeichnet, dass** die zweite Befestigungsstelle (12') in Bezug auf die Auswurföffnung (6'), die sich von den Öffnungen (6, 6') der zwei Mittel zum Transport von Produkt (en) (4 und 4') in der Vorwärtsrichtung (A) am weitesten hinten befindet, wenigstens geringfügig in der Vorwärtsrichtung (A) längs nach hinten versetzt ist, und dadurch, dass die erste Befestigungsstelle (12) in Bezug auf die Öffnung (6), die sich in der Vorwärtsrichtung (A) am weitesten vorn befindet, wenigstens geringfügig nach hinten versetzt ist.

4. Pflanzeinheit nach einem der Ansprüche 1 bis 3, **dadurch gekennzeichnet, dass** das Befestigungsende (7') des Andruckorgans (7) mit der Schnittstelle zur festen Verbindung (11) an einer der Befestigungsstellen (12, 12') dieser Letzteren durch eine Rastverbindung zusammengebaut wird.

5. Pflanzeinheit nach Anspruch 4, **dadurch gekennzeichnet, dass** das Befestigungsende (7') des Andruckorgans (7) Montagemittel (13) aufweist, die geeignet und dazu bestimmt sind, mit einer beliebigen von den Befestigungsstellen (12, 12') der Schnittstelle zur festen Verbindung (11) zusammenzuwirken, wobei die Rastverbindung von lösbarer Art durch elastisches Einschnappen erhalten wird, insbesondere durch elastische Verformung wenigstens eines Teils der Schnittstelle zur festen Verbindung (11), speziell wenigstens einer Wand (14, 14') der Schnittstelle (11), welche die betreffende Befestigungsstelle (12, 12') oder einen Teil dieser Letzteren aufweist.

6. Pflanzeinheit nach einem der Ansprüche 1 bis 5, **dadurch gekennzeichnet, dass** jede Befestigungsstelle (12, 12') aus einem Paar von fluchtenden und übereinstimmenden Schlitzen (12") besteht, die in gegenüberliegenden Wänden (14, 14') der Schnittstelle zur festen Verbindung (11) ausgebildet sind.

7. Pflanzeinheit nach einem der Ansprüche 1 bis 6, **dadurch gekennzeichnet, dass** die Auswurföffnung (6') des zweiten Mittels (4') zum Transport von Produkt (2'), vorteilhafterweise in Form eines Rohres und eines Kanals, in die oder unmittelbar oberhalb der Schnittstelle zur festen Verbindung (11) mündet, welche eine Durchgangsmanschette bildet.

8. Pflanzeinheit nach einem der Ansprüche 1 bis 7, **dadurch gekennzeichnet, dass** die Schnittstelle zur festen Verbindung (11) an einem Schenkel (10) befestigt ist, der Teil des Körpers (9) ist und die Furchenscheiben (3) trägt, wobei die Schnittstelle (11) unterhalb und hinter der Drehachse (AX) der Furchenscheiben (3) positioniert ist.

9. Pflanzeinheit nach einem der Ansprüche 1 bis 8, **dadurch gekennzeichnet, dass** das Andruckorgan (7) Vorsprünge (13) aufweist, die an seinem Befestigungsende (7') seitlich vorstehen und Mittel zum Zusammenbau mit der mit der Schnittstelle zur festen Verbindung (11) bilden, wobei diese Vorsprünge (13) vorteilhafterweise aus vorstehenden und nicht mit dem Polymermaterial, aus dem das Organ (7) besteht, überformten Flügelabschnitten eines Metallplättchens (13') bestehen, das einen nur in das Befestigungsende (7') integrierten Einsatz bildet oder sich wenigstens in einem Längsabschnitt des Körpers des Organs (7) erstreckt.

10. Pflanzeinheit nach einem der Ansprüche 1 bis 9, **dadurch gekennzeichnet, dass** wenigstens einige der Befestigungsstellen (12, 12') der Schnittstelle zur festen Verbindung (11) auch in einer vertikalen Richtung, das heißt senkrecht zur Vorwärtsrichtung (A), zueinander versetzt sind.

11. Pflanzeinheit nach einem der Ansprüche 1 bis 10, **dadurch gekennzeichnet, dass** die Schnittstelle zur festen Verbindung (11) außerdem wenigstens eine Stelle (17) zur Befestigung eines Ablenkelements (18) aufweist, zum Beispiel eine von zwei übereinstimmenden, gegenüberliegenden Schlitzen (17') gebildete Stelle (17) für eine Anbringung eines länglichen, plättchenförmigen Ablenkelements (18) durch Einrasten, das dazu bestimmt ist, sich oberhalb des Andruckorgans (7) zu erstrecken, und mit vorstehenden seitlichen Flügelabschnitten (18') versehen ist, die dazu bestimmt sind, in den Schlitzen (17') zum Eingriff zu gelangen.

12. Gezogene oder aufgesattelte Reihensämaschine (2), **dadurch gekennzeichnet, dass** sie wenigstens eine, vorzugsweise mehrere Pflanzeinheit(en) (1) nach einem der Ansprüche 1 bis 11 aufweist, die jeweils mit einem Andruckorgan (7), das austauschbar in wenigstens zwei Positionen, die in der Vorwärtsrichtung (A) der Sämaschine (2) im Einsatz längs versetzt sind, positioniert werden kann, und mit wenigstens zwei Mitteln (4, 4') zum Transport des (der) abzulegenden Produkts (Produkte) (2') in die Furche (8), deren jeweilige Auswurföffnungen (6, 6') in der Vorwärtsrichtung (A) versetzt sind, ausgestattet sind, wobei diese Mittel (4, 4') selektiv oder gleichzeitig einsatzbereit oder aktiv sein können.

## Claims

1. Sowing unit (1) for seed drill (2), this unit comprising, on the one hand, at least two furrow-opening discs (3) arranged in a V pointing in the direction of advance (A) during use of the seed drill, and, on the other hand, at least two means (4, 4') for conveying particulate or granular product(s) (2') from at least one reservoir (5) forming part of said seed drill, of which the respective ejection outlets (6, 6') are situated between the two furrow-opening discs (3) while being mutually offset in the direction of advance (A), said sowing unit (1) also comprising a body (9) that carries said aforementioned discs (3) and means (4, 4'),
the unit (1) comprising an elongate member (7) for compacting the product or products (2') deposited at the bottom (8') of the furrow (8), and an interface (11) for locking said compacting member (7) to the body (9), which compacting member (7) comprises an end (7') for fixing to the interface (11) and an opposed supporting end (7"), **characterised in that** the locking interface (11) comprises at least two fixing sites (12, 12') for the corresponding end (7') of the member (7), offset from each other longitudinally in the direction of advance (A).

2. Sowing unit according to claim 1, **characterised in that** the locking interface (11) is provided with two fixing sites (12 and 12') offset longitudinally from each other, each site (12, 12') defining a position, indexed in the direction of advance (A), of the supporting end (7") of the compacting member (7) relative to the respective ejection outlets (6, 6') of the two means (4 and 4') for conveying product(s).

3. Sowing unit according to claim 2, **characterised in that** the second fixing site (12') is at least slightly offset longitudinally towards the rear, in the direction of advance (A), relative to the ejection outlet (6'), situated the furthest to the rear in said direction of advance (A), of the outlets (6, 6') of the two means for conveying product(s) (4 and 4') and **in that** the first fixing site (12) is at least slightly offset towards the rear, relative to the outlet (6) situated the furthest forwards in the direction of advance (A).

4. Sowing unit according to any one of claims 1 to 3, **characterised in that** the end (7') for fixing the compacting member (7) is joined to the locking interface (11), at the level of one of the sites (12, 12') for fixing the latter, by means of a click-lock connection.

5. Sowing unit according to claim 4, **characterised in that** the end (7') for fixing the compacting member (7) comprises assembly means (13) suitable and designed for cooperating with any one of the sites (12, 12') for fixing the locking interface (11), the releasable click-lock connection being obtained by elastic engagement, in particular by elastic deformation of at least part of the locking interface (11), in particular at least of one wall (14, 14') of said interface (11) comprising the fixing site concerned (12, 12') or part of the latter.

6. Sowing unit according to any one of claims 1 to 5, **characterised in that** each fixing site (12, 12') consists of a pair of aligned, coincident slots (12") formed in opposite walls (14, 14') of the locking interface (11).

7. Sowing unit according to any one of claims 1 to 6, **characterised in that** the ejection outlet (6') of the second means (4') for conveying product (2'), advantageously in the form of a tube and conduit, opens out in or immediately above the locking interface (11), which forms a sleeve with through-passage.

8. Sowing unit according to any one of claims 1 to 7, **characterised in that** the locking interface (11) is fixed to a leg (10) forming part of the body (9) and carrying the furrow-opening discs (3), said interface (11) being positioned below and to the rear of the axis of rotation (AX) of said furrow-opening discs (3).

9. Sowing unit according to any one of claims 1 to 8, **characterised in that** the compacting member (7) comprises protuberances (13) projecting laterally at the level of its fixing end (7') and constituting means for joining to the locking interface (11), these protuberances (13) advantageously consisting of projecting wing portions not encapsulated with the polymeric material that constitutes said member (7), of a metal lamella (13') forming an insert integrated in the sole fixing end (7') or extending in a longitudinal part of at least the body of said member (7).

10. Sowing unit according to any one of claims 1 to 9, **characterised in that** at least some of the fixing sites (12, 12') for the locking interface (11) are also offset from each other in a vertical direction, that is, perpendicularly to the direction of advance (A).

11. Sowing unit according to any one of claims 1 to 10, **characterised in that** the locking interface (11) also comprises at least one site (17) for fixing a deflector element (18), for example a site (17) formed by two facing, coincident slots (17') for click-mounting of an elongate lamella-shaped deflector element (18), designed to extend above the compacting member (7) and provided with projecting lateral wing portions (18') designed to become engaged in said slots (17').

12. Tractor-drawn or semi-mounted seed drill (2), **characterised in that** it comprises at least one, preferably more than one, sowing unit (1) according to one of claims 1 to 11, each equipped with a compacting member (7) capable of being positioned interchangeably in at least two positions offset longitudinally in the direction of advance (A) of the seed drill (2) during use and at least two means (4, 4') for conveying into the furrow (8) the product or products (2') to be deposited, of which the respective ejection outlets (6, 6') are offset in the direction of advance (A), these means (4, 4') being capable of being operational or active selectively or simultaneously.
